# EUROPEAN PATENT APPLICATION

(11) **EP 1 793 483 A1**
(43) Date of publication of application: **06.06.2007**
(21) Application number: 05788546.9
(22) Date of filing: 09.08.2005
(51) Int. Cl.: H02K 53/00

(54) **MAGNETIC ROTARY DEVICE**

(30) Priority: 07.09.2004 ES 200402150
(71) Applicant: Freixas Vila, Ramon, 43424 Tarragona (ES)
(72) Inventor: Freixas Vila, Ramon, 43424 Tarragona (ES)
(86) International application number: PCT/ES2005/000456
(87) International publication number: WO 2006/040368

(57) **Abstract**

The invention relates to the technical field of magnetic motors in which the rotational movement is generated solely by the repulsion between the rotor and stator magnets. The aim of the invention is to produce a rotation torque using only magnetic force. The inventive device comprises a rotor and a stator which are formed solely by magnets. The functional unit comprises three magnets, namely: one magnet in the rotor (R) and two magnets forming the stator (A) + (B). Magnet A is used to move the rotor magnet (R) closer to the stator (A) and (B). Magnet B is used to repel the rotor magnet (R) since both of said magnets have the same magnetic north pole (N). The device is formed by numerous functional units which are arranged in a circle or in a three-dimensional manner. The invention is used to obtain energy or assist the rotation torque.

## Description

### TECHNICAL STATEMENT

A motor consists of two parts, one immobile (stator) and the other mobile (rotor) which generally rotates inside the first. Nowadays there are motors whose rotor is made up of permanent magnets and the windings , through which the electric current flows, are located in the stator, in this type of motor there is usually only one part with magnetic material (magnets) which are generally situated in the rotor.

There are also devices that have magnets in both the rotor and the stator, to create a rotation torque , that although not very strong, helps in the rotational movement. The device in this memorandum forms part of this second group. If we were to mention other examples we could quote the following patents US4712439, US5402021, US4151431, US5594289.

### DESCRIPTION

The objective of this device is to develop a rotation torque only using the energy of the magnets, without the need for electricity or other forms of energy.

The device consists of two parts, a stator and a rotor, each part includes the magnets which will be responsible for supplying the force necessary for the rotation, both the sides of the magnets of the rotor R and the sides of the magnets of the stator that will approach each other are the same pole (North) and consequently they will be repelled.

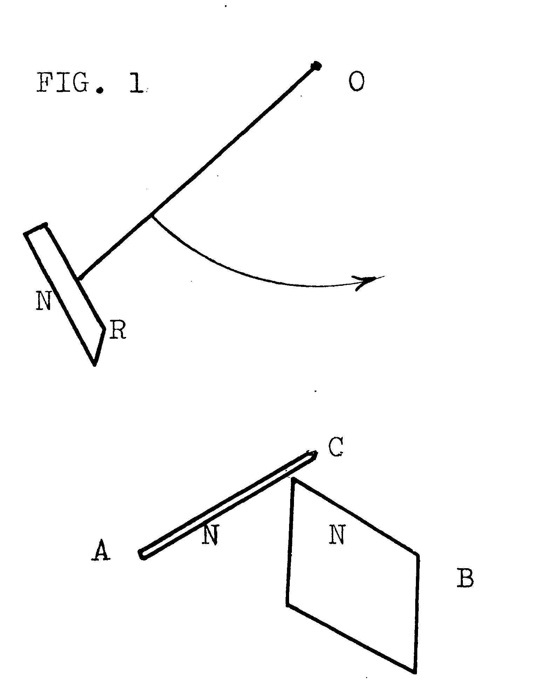

The basic functional unit consists of a magnet in the rotor and two others in the stator (magnet A and magnet B). These three types of magnet can have cut at an angle or inclination respect to the horizontal (fig. 1) For the moment one cannot determine with exactitude the size of the angles, this is because they can depend on both the strength of the magnets used and the risk of demagnetization of the magnets if the angle were too small. However, we could say that the angle will be within the range fifteen to ninety degrees.

### The rotor:

The magnet in the rotor unit will turn around a central shaft in a circular motion. The leading edge, which first approaches the magnet A in the stator, is also cut at an angle. The polarity of its faces can have variations (magnetization only on the side that faces magnet B, magnetization of several poles on the previous face, axial magnetization...) but it must be the same , exactly or in part, as the magnet B in the stator; in all cases they must always exist the fact that they are repelled when they face magnet B in the stator.

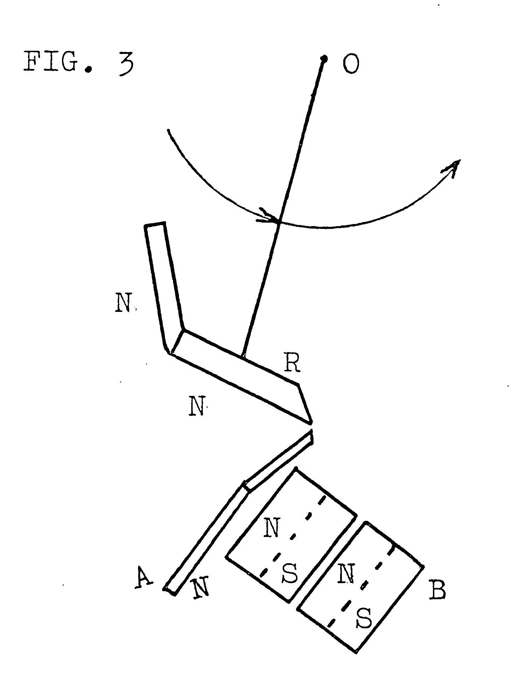

The rotor magnet can be formed of a flat magnet (R) with one of its ends at an angle or not, or magnets together, one after the other (fig.3), or also semicircular magnet with its end at an angle, or formed by thin magnets making a block, to minimise the eddy currents . The last options give the rotor superior repulsion.

The rotor magnet forms an angle with the tangent straight of the circle.

### Stator:

The stator in the simplest model of the device is formed by two types of magnet, one magnet A on the left and one B on the right, both placed nearby overlapping the magnets at the end C of the magnet A. (fig.1)

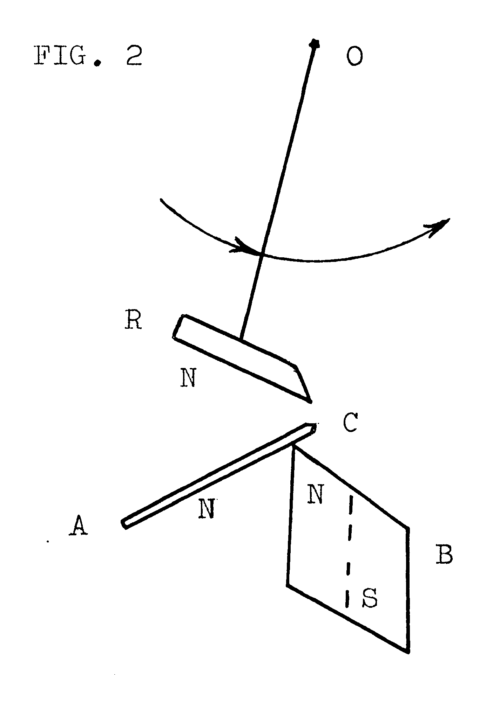

The purpose of magnet A is to cover the repulsion on the rotor magnet when this is approaching from the left of magnet B. By doing this, the rotor magnet can approach without any difficulty as far as the end C of magnet A (fig.2). When the rotor magnet has passed all magnet A without any problems, it then comes face to face with magnet B whilst this is repelling it, both facing poles are North and as a result the rotor magnet has no option but to be strongly repelled towards the opposite side to that from which it entered, thereby causing a turning movement.
The magnet A will be thin and will have a sharp angle with respect to the horizontal, this angle will vary depending on the strength of the magnets employed, the end C can be cut to have a double angle or single one which will allow the correct orientation of the magnetic fields. The angles of the pointed end can very depending on the strength of the magnets employed used in the device. The magnet A can accept magnetization (multiple or singular) on only one side or on both, it can be axial magnet or bar magnet . If it is axial magnet the side that faces its neighbouring magnet B will have the same polarity north-north, in any case, it must be such that it avoids adding to the effect of magnet B on A, thereby preventing the creation of an only dipole in the stator.

The purpose of magnet B is to create repulsion in the stator. It will be thicker and can present an angled edge on the side that will repelled by the rotor. Several magnets angled respect to the horizontal can be added, together forming a large magnet B, this will result in this zone maximising the potential of its repulsion. (fig.3). Magnet B can have any of the following magnetization : on one side only, the one that faces the rotor; magnetization on several alternate poles, axial magnetization , hollow cylinder with magnetization on the inside only with several alternate poles, ... The magnet B is to be found a little lower and towards the centre of the end C.

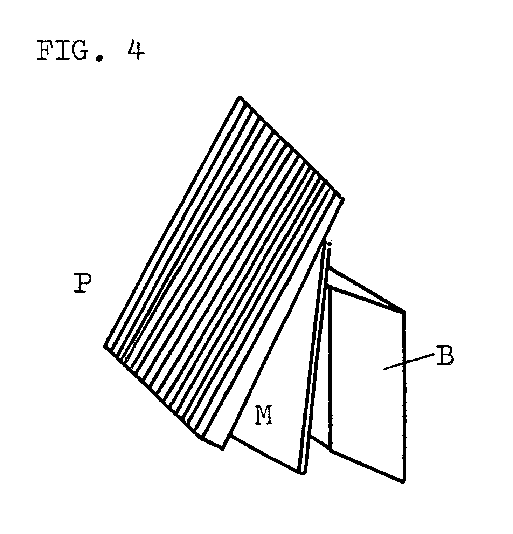

Finally, the stator can have a variant which consists of substituting magnet A for a laminated plate (P) made of a material appropriate for its

conductivity, as thin as possible on the side pointing to the rotor (fig. 4). It should be angled the least perpendicular possible, in relation to the movement of the rotor, that is allowed by the magnetic field B, it will be laminated; the objective of these two characteristics is to reduce the eddy current created in a metal for example.

This variant of the functional unit, between the plate made for example of metal and magnet B, must situate a insulator from the magnetic field produced by B, examples would be a very thin magnet in the middle o also putting a high magnetic permeability material(M) with the aim of directing the field B and/or covering it so that it does not effect the zone of the laminated plate.

After defining a functional unit we can place several of them in a circle, leaving the shaft exactly in its centre, These will allow the creation of a rotation torque which turns the device without the need for any external energy source.

The way to connect or disconnect the device consists of moving the blocks of the stator forwards or backwards or to the right or the left in relation to the turning circumference defined by the rotor. The bigger the distance between them the smaller the magnetic field. It can also be started by rotating the stator.

The geometry with which the functional units are placed are very varied, be it as a cross in the rotor and two repulsion blocks in the stator, or rotor arm and three blocks of stators, or other variations; or units only in a circle or set out in three dimensions like a rotor with its arms in a helicoidal form as in DNA; or the stator in helicoidal form. In all cases the multiple variations come due to the effects that can be created between magnets, if two magnets are too close to each other their fields

join together but their effects are not the same as the two magnets separately. We must remind you that we have described functional units and it is their effect we are looking for and not the effect of the sum of two magnets that are too close together as they do not produce the rotation torque we desire. This effect of summing will also be influenced by the strength of the magnets used, generally the more powerful the magnets the larger the distance between units.

For optimum functioning we must leave a magnetic gradient between units.
Any magnetic insulator can be used to reduce the magnetic effects between functional units; orientate the fields for better function, improve the minimum distance between units in this way compacting the device. This insulators, not in diagrams, is not specified and it is very difficult to define its future location due to the multiple effects of distance on the magnetic materials.

In the future coils, solenoids could be attached that, using electrical energy, to help the rotor in its rotary movement. This variation will be the device assisted by an exterior source of energy.

Presently the device does not work as well as we would like, maybe in a future development an exact strength will be found for the magnets or the intervention of other elements that will allow for the autonomous movement of the rotor by itself. It has to be helped so that the rotor passes over the magnets of the stator, sometimes it is hard for the stator to enter, but this will only be a helper to get the rotation going. The degree of load that the magnets can bear still needs work, we do not know as yet the exact time that it can work before the magnetic force diminishes, demagnetisation that would ruin its functioning.

### DESCRIPTION OF THE FIGURES:

Figures 1 and 2.- The rotor arm which has a magnet at one end, can turn a complete circle around its axis. In the basic functional unit, magnet R on the rotor approaches the stator from the left (fig.1) and progressively runs above magnet A until it reaches its end C (fig.2), beyond this point it will be strongly repelled by magnet B which has the same polarity as the rotor (R)
Figure 3.- The rotor magnet has another magnet placed alongside which increases its strength. Magnet B is formed by the sum of the two magnets without cut inclined in an angle to the horizontal.
Figure 4.- Magnet A from the previous figures is replaced with a metal plate (P) in fine sheets. Between the plate and magnet B there is insulator material (M)

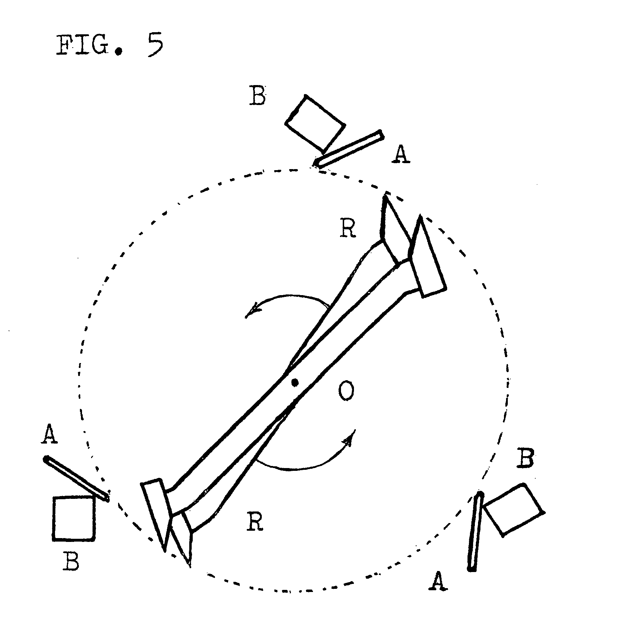

Figure 5.- Functional units with the rotor set up helicoidally to form a motor.

### REALIZATION MODE:

We have to construct basic functional units using three magnets. We must remember that the rotor magnet (R) must enter as easily as possible at one end of the stator block and be strongly repelled from the other end.

For the rotor magnet R we need magnets that are cut or manufactured with an angle on the end that first moves into the zone of magnet A, that is to say on the left of the stator, the magnet R will describe a semicircular movement above the stator block. The rotor magnet R have a angle of inclination respect to the tangent straight of the circumference. On installing the magnets A and B of the stator the angle of inclination will vary depending on the strength of the magnets employed. Magnet A will be thin and will be able to accept multiple magnetizations. Magnet B will be thicker and will be made more simply with the same polarity as

the face of rotor magnet R that it faces, for example North pole of rotor magnet R will face the North pole of magnet B. We must place magnets A and B quite close together, almost overlapping at end C of A, magnet B must be placed a little lower than end C, and also a little towards the centre of magnet A at the end C. Magnet A will have the same polarity as its neighbouring magnet B in their nearest faces, this will avoid their two magnetic fields adding together. (fig.2)
The rotor magnet will be placed on an arm that can turn around with respect to its shaft at the moment that repulsion is produced between rotor magnet(R) and magnet B of the stator.
Once several functional units have been made, they can be placed in a circle or three dimensionally, the number of units and their position depends of the radius of the circle and of the strength of the magnets employed. The sum of the magnetic effects from two or more units that are too close together could lead to a lack of its functional utility.
To start the device, move the stator blocks towards the rotor, the subsequent repulsion caused by poles of the same polarity will proportion a rotation. To stop the device it will be sufficient to move the stator blocks away from the rotor until it stops. The distances of movement necessary will depend on the strength of the magnets used. It is also possible to start and stop by slightly turning the stator block.

### INDUSTRIAL APPLICATION:

It would be a helpful device for the torque of rotation, given that at present it does not work as an autonomous motor. Sometimes it is hard for the rotor magnet to pass over the stator magnets and it has to be helped. For its characteristics the device could be used when pedalling a bicycle, it would help with the pedalling.
At present it is possible to obtain a certain rotation torque , sometimes with difficulty, at low rotation movement.

## Claims

1. Magnetic rotary device, which uses the magnetic field energy of magnets in repulsion, comprising functional units created of at least one or more rotor magnets (R) and stator magnets including at least two types of components: A on the left, B on the right, or the other way round, depending on the direction of turn of the device; the first mobile component the permanent magnet said rotor (R) having magnetic poles; the second component said stator separated by a distance from the first one, having at least a surface with one or more magnetic poles, close to one of the surfaces of the permanent magnets, producing magnetic interaction between both components; the mobile part (R) turns in relation to the static part (A, B) around a turn shaft; **characterized** because one or more magnets exist in the stator which are not an only dipole, the A components functioning as facilitators of the approach of the rotor magnets (R) to the C end of the A component, after which the stator magnets (B) will cause repulsion on the rotor, rotation torque thus taking place.

2. Magnetic rotary device, according to claim 1, **characterized** because the one or more magnets(R) of the rotor show angle, or not if they are thin, in the magnet end which will first enter the stator.

3. Magnetic rotary device, according to claim 1, **characterized** because rotor magnets (R) may be or not slightly inclined in angle in relation to a tangent straight to the circle described by their rotation.

4. Magnetic rotary device, according to claims 2 and 3, **characterized** because it comprises at least one magnet.

5. Magnetic rotary device, according to claims 2 and 3, **characterized** because it may comprise or not thin magnets, with inclination or with a cut in the angle at least in one of its ends, or alternatively the rotor may have been formed by lamination, with multiple magnets in one direction, creating structure with one or more angles.

6. Magnetic rotary device, according to claims 2, 3, 4 and 5, **characterized** because the magnetic units which comprise the device may be or not insulated magnetically.

7. Magnetic rotary device, according to claim 1, **characterized** because the A components or A magnets are thin at least in the zone of their C end.

8. Magnetic rotary device, according to claim 1, **characterized** because the magnetic interaction between R and A components or magnets is attractive between its closest ends.

9. Magnetic rotary device, according to claim 1, **characterized** because the magnetic interaction between components R and A is not attractive between its closest ends.

10. Magnetic rotary device, according to claim 1, **characterized** because the A component is in angle in relation to the horizontal and It can be or not at least one magnet.

11. Magnetic rotary device, according to claims 7 and 10, **characterized in that** the A component has a C end, which is the closest to the rotor R, and which can have, if it is not thin, single or double angle.

12. Magnetic rotary device, according to claims 2, 5 and 11, **characterized** whose components, if they are thin enough, will form some angle in their ends, as a result of the chamfer during the process of fabrication.

13. Magnetic rotary device, according to claim 1, **characterized** because the faces of the A components have to cover the field of B magnets which is projected towards R rotor magnets before the C end, except for claim 20.

14. Magnetic rotary device, according to claim 1, **characterized** because the faces of the A components will be arranged in such a way that the addition of the magnetic fields which form an only dipole in the stator is prevented from being created.

15. Magnetic rotary device, according to claim 1, **characterized** because one or more B magnets are placed in inclination or it may have or not an angled edge.

16. Magnetic rotary device, according to claims 1, 15, **characterized** because the B magnets must be placed a little lower than end C, and also a little towards the centre of magnet A at the end C.

17. Magnetic rotary device, according to claim 15, **characterized** because the sum of fields of several magnets can form the B magnet.

18. Magnetic rotary device, according to claim 15, **characterized** because magnet B may be created by lamination of many magnets in one direction.

19. Magnetic rotary device, according to claims 15, 17 and 18, **characterized** because the face of the magnet B that faces the rotor magnet R will cause repulsion between R and B.

20. Magnetic rotary device, according to claim 1, **characterized** because a variant of the functional unit may exist, which creates the A component by means of lamination, with many thin plates(P) inclined in one direction, either metal or made of other materials.

21. Magnetic rotary device, according to claim 20, **characterized** because some insulator or orientation material(M) of the magnetic fields of B magnets is located between the laminated component (P) and B magnets, the isolating material being or not one magnet at least.

22. Magnetic rotary device, according to claims 7 and 10, **characterized** because if the A component is a magnet, it can be created by lamination, with one or many thin magnets in one direction, preferably one next the other having different angle of inclination.

23. Magnetic rotary device, according to claim 1, **characterized** because several functional units are arranged in circle or three dimensions forming a motor, with static magnetic components set out in points around a rotation shaft.

24. Magnetic rotary device, according to claim 23, **characterized** because the rotor or the stator can be formed by arranging units helicoidally.

25. Magnetic rotary device, according to claims 23 and 24, **characterized** because magnetic insulators can be or not placed between the functional units.

26. Magnetic rotary device, according to claims 23 and 24, **characterized** because in order to turn on and off the device, the stator blocks can be approached or moved away respectively, or alternatively they can be rotated.

27. Magnetic rotary device, according to claim 23, **characterized** because coils or solenoids might exist or not, helping rotation by means of electric energy.

28. Magnetic rotary device, according to claims 1 and 16, **characterized** because an insulator or orientation element of the field of B magnet can be located between the A component and the B magnet. The insulator or orientation element can be a magnet.

29. Magnetic rotary device, according to claims 5, 18, 20 and 22, **characterized** because if the components are laminated, insulators can exist to prevent induced currents.

## Amended claims

### Amended claims under Art. 19.1 PCT

1. Magnetic rotary device, which uses the energy of magnetic fields of magnets first in attraction, then in repulsion, and which comprises functional units created of magnets including rotor magnets (R) and stator magnets. The rotor turns in relation to the stator around a shaft. The rotor and stator magnets have magnetic poles separated by a distance, causing magnetic interaction between them, which is first attraction, then repulsion, the rotation torque thus being created ; **characterized** because there are at least two zones of magnetic components in the stator, the first zone of magnet (A) in one of the ends of the stator, through which the rotor magnet first enters the stator, where attraction takes place because the facing magnets closer to the rotor magnet and the magnets of the first zone of the stator are attractive; the second zone of magnets (B) close to the first in the other end of the stator; both zones separated by repulsion when the same polarity poles of the faces of the closer ending magnets which separate both zones confront, creating inclination in acute angle between the magnet of the first zone and the magnet of the second zone.

2. Magnetic rotary device, according to claim 1, **characterized** because if there are several magnets in the second zone of the stator, they are arranged in staggered form with the distance of the face which shows both magnetic poles to the rotor, the distance increasing with each magnet, when moving apart from the first zone of the stator.

3. Magnetic rotary device, according to claims 23 and 24, **characterized** because a high magnetic permeability material can be located between the laminated magnet of the first zone and the magnet closest to the second zone in order to isolate and orientate the magnetic field of the second zone of the stator.
